# EUROPEAN PATENT APPLICATION

(11) **EP 4 624 069 A1**
(43) Date of publication of application: **01.10.2025**
(21) Application number: 24461554.8
(22) Date of filing: 28.03.2024
(51) Int. Cl.: B22C 9/06, B22D 17/22, B22D 27/04, B22F 5/00, B22F 10/28, B29C 45/73, B33Y 10/00, B33Y 80/00

(54) **A THERMOSTATING SYSTEM FOR A CASTING MOULD FORM WITH HIGH HEAT TRANSFER PROPERTIES AND THE METHOD OF ITS PRODUCTION**

(71) Applicant: Saga Poland sp. z o.o., 43-170 Laziska Gorne (PL)
(72) Inventor: Pasierb, Lukasz, 36-007 Malawa (PL); Figurski, Krzysztof, 04-348 Warszawa (PL); Myszka, Dawid, 05-092 Dziekanow Polski (PL); Burbelko, Andriy, 31-352 Krakow (PL); Pieklo, Jaros aw, 30-399 Krakow (PL); Garbacz-Klempka, Aldona, 31-465 Krakow (PL)
(74) Representative: Czarnik, Maciej

(57) **Abstract**

A thermostating system (1) for a casting mould (2) with high heat transfer properties, comprising of a cooling channel (3) provided inside an interim layer (4) that represents the inner part of a casting mould (2) made of steel, preferably of tool steel, and a cooling device configured to provide a cooling medium to a cooling channel (3),characterised in that the interim layer (4) of the cooling channel (3) is made of material whose thermal conductivity is higher by at least 250 W/(m·K) than the thermal conductivity of the working surface (5) of the casting mould, and the method of its production.

## Description

The present invention relates to a thermostating system for a casting mould with high heat transfer properties, used in the casting industry, especially for the production of high-pressure metal alloy castings.

Each element of the technological process of production of high-pressure light metal alloy castings is important in the context of production quality and repeatability. Metal cooling conditions in the cast affect the physical properties, quality and visual appearance, but also indirectly the price of the final product, which is significant to the profitability of production. In the times of ruthless struggle to maintain the profitability of production, every new technology that reduces the time of production of aluminium or zinc alloy elements without reducing their required quality is priceless and is quickly adopted by a wide range of manufacturers.

When we look at the development of thermostating devices and techniques, we can observe that it is evolving in two directions: towards the extreme reduction of cooling time and towards the achievement of new properties of high-pressure die castings by way of intentional and controllable generation of an adequate temperature field in the individual parts of a die casting mould in order to locally affect its structure (directional crystallisation). The method of thermostating of a die casting mould, the equipment and devices used therein depend on the type of casting alloy; alloy parameters (liquid temperature, the degree of degassing); the size of the formed component and the number of mould cavities (which is related to the tool size and thermostating system); the finished product requirements.

In the case of aluminium alloy castings, the die casting mould must be heated to the temperature of approximately 200°C. The next criterion is connected with the finished product requirements and refers to the dimensions and their tolerances, the repeatability of the cycle, non-dilatational strain and the high surface quality of product. All of the above factors determine the design and the production of the injection mould, as well as the selection of tools for its thermostating. A mould thermostating system usually consists of the following elements and components: a die casting mould thermostating system (cooling channels inside the mould) and an external cooling device that supplies a thermostating medium to the die casting mould.

Thermostating devices are responsible for the appropriate preparation of the thermostating liquid (by heating it to a preset temperature) and then for transporting it through the pressure lines to the die casting mould, where the pressure lines facilitate the exchange of heat between the mould heated by liquid metal and the cooling liquid. Wherein heat exchange efficiency depends on: the mould size (its thermal capacity), the difference between the temperature of the mould and liquid metal, the material of the mould (thermal conductivity), the design of the cooling system (the layout of channels, their cross-section and length), the type of the thermostating medium used, the efficiency of the thermostating device.

The system of channels that distribute the thermostating medium is an especially important element of a die casting mould. They should be arranged possibly close to the surface and their arrangement should facilitate fast exchange of heat. Their cross-section size should range between 4 and 10 mm - wherein it is based on factors such as their distance from adjacent channels and mould size, i.e. the quantity of heat to be collected from the mould during the technological process.

There are many different structural designs of die casting moulds where the shape of the cavity (cavities), the layout of ejectors or other functional elements of the mould prevent the correct routing of cooling channels. In such cases, the elements of moulds, cavities (insets) or parts (cores) can be preferably manufactured using additive technologies, which facilitate the production of thermostating channels of all cross-sections and shapes.

Additive technologies are derived from Rapid Prototyping methods, which involve the rapid production of very complicated shapes of elements with high precision and in a very short time. The time of implementation of new designs into high-volume die cast production is currently very short and is only limited by the technology of production of prototypes and tools. Amid the effort to reduce this time, the natural consequence of rapid prototyping is the constant development of rapid tooling (RT) methods. The application and development of these methods enables a very rapid and flexible response to the needs and requirements of product purchasers (tool shape modification) and provides tangible benefits due to the reduction of production time and costs. One RT option involves the employment of additive technologies for the production of tools. And one of its applications is the production of inserts/cores for die casting moulds with all types of thermostating channel arrangements in terms of channel cross-section and routing inside the mould. This provides almost unrestricted possibilities in terms of designing and manufacturing of cooling systems that are adapted to the shape of the formed cast, with the simultaneous reduction of the cooling time and therefore the cycle time by as much as 45% in some cases.

The total duration of the high-pressure die casting process mostly depends on the time needed for the cooling of the cast in the mould. This time is needed for the liquid metal crystallising in the mould to cool down to a temperature that allows it to be safely removed, without the modification of its geometry and structure, in order to guarantee the achievement of the required strength and performance characteristics. Effective cooling of the die casting mould is very important, because it affect both the duration of the cycle and the quality of the produced castings. Traditional cooling channels are usually provided in the form of simple holes drilled in the side of the mould, which geometrically restricts their forming and routing and thus restricts the flow of the cooling fluid and the collection of heat from specific mould areas.

Known according to the state of the art is the conformal cooling technology, wherein mechanical machining or 3D printing methods are used to create water-cooled channel systems, of the geometry similar to that of the cast product. This method is usually used in the production of elements of metal casting moulds, in which cooling channels provided inside the mould collect heat from the liquid metal that is setting in the mould, ensuring adequate rate of crystallisation and a fragmented structure. But in traditional systems with conformal cooling, the cooling and heat exchange processes are not yet ideal and it is still possible to improve the efficiency of the heat exchange between the surface of the mould that holds the crystallising liquid metal and the cooling liquid.

Korean application KR20130058364A discloses an injection mould, wherein the cooling circuit is provided along the shape of the mould cavity in order to achieve uniform cooling characteristics. The cooling circuit's structure is made of copper with excellent thermal conductivity, in order to maximise the efficiency of the heat exchange between the mould and the cooling medium. However, the disclosed solution is used for the purposes of the injection moulding technology, which is specific to to processing and forming of plastic products. Temperature and material requirements related to the production of high-pressure metal alloy castings are vastly different from those applied in the plastics processing industry.

Chinese application CN108746374A discloses an invention in the field of mould preparation, related in particular to the method of preparation of a mould insert for hotstamping with a conformal cooling water channel. The method of preparation of the mould comprises the following steps: a) the shaping of the lower half of the profiled cooling water channel made of tool steel; b) the placement of a pipe adapted to the shape of profiled cooling water channel inside the shape of the lower half of the part described in step a; c) execution of an arched reinforcement of the interim layer on the surface of the base and pipe; d) the material of the reinforcement layer is resistant to wear in high temperatures; e) after the application of the reinforcement, the mould inserts are tempered and slowly cooled down in order to eliminate residual stress; f) the tooling of the cooled mould insert, so that the shape of the surface and dimensional precision of the mould are as required. However, the disclosed solution does not include the use of highly conductive material between the surface of the water channel and the mould made of tool steel.

Moreover, Chinese application CN110181781 discloses a cooling die and a method of its tooling. The conformal cooling die comprises the mutually connected first die body cover and second die body cover. The thickness of the wall of the first die body is smaller than the thickness of the wall of the second die body. The first die body contains a capillary cavity filled with filling material. A conformal cooling water channel is provided in the second die body. The capillary cavity remains in contact with the conformal cooling water channel. In comparison with a traditional conformal cooling die, the capillary cavity can be enclosed within a thin wall of the conformal cooling die, which improves the efficiency of cooling and the homogeneity of the conformal cooling die. This also extends the life cycle of the conformal cooling die. The solution according to the Chinese description allows the conformal cooling die to be used in the field of precision injection moulding. However, the disclosed solution does not include the use of highly conductive material between the surface of the water channel and the mould made of tool steel.

This justifies the performance of further works towards the improvement of the efficiency of heat exchange between the surface of the mould that contains the crystallising liquid metal and the cooling liquid, in order to resolve the above-mentioned technical problems and challenges present in the casting industry, especially in connection with the technology of production of high-pressure metal alloy castings.

Due to the growing demand for new solutions of the field of the technology of production of high-pressure light metal alloy castings and in view of the efforts of manufacturers to maintain the profitability of production, each new technology that enables the reduction of the time of production of light metal alloy elements without affecting product quality is very significant. The aim of the invention was to resolve problems with the transfer of heat from the crystallising metal in a die casting mould and thus to reduce the time of the casting process and to improve the strength characteristics of castings. in the course of the works on the invention, the authors decided to provide a thermostating circuit of the casting mould, formed along the shape of the mould cavity in order to achieve homogeneous cooling properties. The authors additionally decided to maximise the efficiency of heat exchange between the surface of the mould cavity and the cooling liquid inside the thermostating system.

The invention relates to a thermostating system for a casting mould with high heat transfer properties, comprising of a cooling channel provided inside an interim layer that represents the inner part of the casting mould made of steel, preferably of tool steel, and a cooling device configured to provide a cooling medium to the cooling channel, characterised in that the interim layer of the cooling channel is made of material whose thermal conductivity is higher by at least 250 W/(m·K) than the thermal conductivity of the working surface of the casting mould.

Preferably, the working surface of the casting mould is made of material of the thermal conductivity of between 25 and 28 W/(m·K), while the interim layer of the cooling channel is made of materials with a higher thermal conductivity between 300 and 400 W/(m K). It is especially preferably made of copper.

Preferably, the thermostating system of the casting mouldaccording to the invention contains between the working surface of the casting mould and the interim layer of the cooling channel an additional layer made of material whose thermal conductivity is higher than that of the working part of the casting mould and lower than that of the interim layer, and there is functional gradation of thermal conductivity between the layers. Especially preferably the additional layer is made of bronze.

The thermostating system is made of materials characterised by functional gradation. The material with the lowest thermal conductivity changes into material with higher thermal conductivity in the direction of the cooling channel. Specifically, H13 tool steel is arranged on the side of the mould cavity, while pure copper is arranged on the cooling channel side. Generally, the direct connection of anisotropic materials generates thermal stresses resulting from differences in the thermal expansion coefficient at the interface layer, which may lead to the separation of materials and cause catastrophic wear of the mould. We can imagine that there is a different material with an intermediate thermal expansion coefficient (e.g. nickel) between the mould material and the material surrounding the cooling channel.

Equally preferably, in the thermostating system of the casting mould according to the invention, the distance between the cooling channel provided in the casting mould and the surface of the casting mould that is in contact with the casting is between 3 and 15 mm, especially preferably this distance is 10 mm.

Preferably the cooling channel of the thermostating system of the casting mould according to the invention has an elliptical cross-section, wherein the longer axis is oriented in a way that enables the production of the mould element using the three-dimensional (3D) printing method without the need of providing supports inside the channels. In the case of horizontal channels, during the manufacturing process the direction of the longer axis of the cross-section should conform with the direction of gravity.

The invention also refers to the method of production of a thermostating system of a casting mould, characterised in that the interim layer of the casting mould and the cooling channel are obtained using additive methods via three-dimensional (3D) printing, with the use of powder made of adequate metal and/or metallic alloy.

Preferably the interim layer of the cooling channel is provided in the form of voids left in selected locations during the generation of the three-dimensional print, wherein the three-dimensional print is produced in layers through the application of powdery materials, preferably copper powder for the interim layer, then tool steel powder for the working surface of the casting mould, and subsequently their local heating and melting using a computer-controlled laser.

The main advantage of the invention is that it provides a casting mould thermostating circuit that is formed along the shape of the mould cavity, in order to achieve homogeneous cooling properties and to resolve problems connected with the transfer of heat generated by the crystallising metal from the die casting mould. It is advantageous in that it maximises the efficiency of heat exchange between the surface of the mould cavity and the cooling liquid inside the thermostating system. Another advantage of the invention is the relatively simple structure of the thermostating system and the possibility of using a similar solution for different mould shapes. The solution according to the invention is also advantageous in that it improves the quality of products, their physical properties and aesthetic appearance by reducing the time of their cooling in the course of the production of high-pressure metal alloy castings, which translates directly into higher profitability of this production. The design of the casting mould thermostating system according to the invention is suitable for mass production and industrial use.

The object of the invention is hereby demonstrated in the form of non-limiting embodiments of the invention and in the figures, wherein:

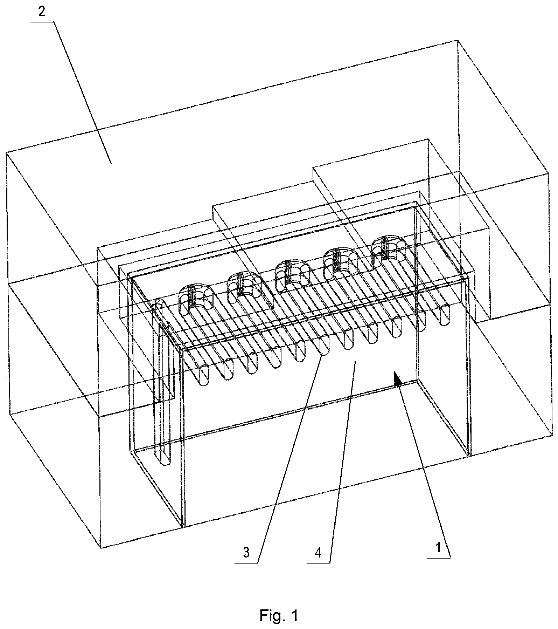

- fig. 1: shows a schematic view of the casting mould thermostating system according to the invention;
- fig. 2: illustrates the microstructure of an AlSi₉Cu₃ alloy die cast in a mould provided with a thermostating system without conformal cooling;
- fig. 3: illustrates the microstructure of an AlSi₉Cu₃ alloy die cast in a mould provided with a thermostating system with conformal cooling;
- fig. 4.: illustrates areas of castings produced with a thermostating system with conformal cooling (A, C, E) and with a thermostating system without conformal cooling (B, D, F), in which the SDAS value is higher than: A,B: 22 µm; C,D: 20 µm; E,F: 18 µm
- fig. 5: illustrates isotherms on the cross-section of the casting and thermostating system in the 20th second of the casting cycle;
- fig. 6: illustrates isotherms on the cross-section of the casting and thermostating system in the 45th second of the casting cycle;
- fig. 7: visualises the process of setting of liquid metal in the cast in the 35th second of the cycle: a) in a thermostating system according to the invention, b) in a traditional thermostating system

### Embodiment 1. Cast microstructure obtained with the use of a thermostating system with conformal cooling and without conformal cooling

Thermostating system 1 of casting mould 2 according to the first embodiment of the invention was designed in such way that cooling channel 3 (conformal) is located at a distance of min. 4 mm from the casting surface reproduced by H13 steel material (thermal conductivity 28 W/(m K)) and the oval of cooling channel 3 is surrounded by interim layer 4 in the form of a minimum 2 mm layer of copper (thermal conductivity 320 W/(m K)). The shape of cooling channel 4 is defined by the ratio of 3 : 8 mm.

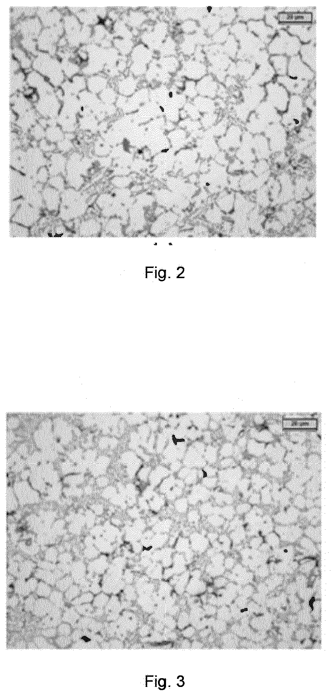

In this embodiment of the invention, the cast was made of AlSi9Cu3aluminium alloy containing, by weight: 88% Al, 9% Si, 3% Cu. It was observed that the structure of a 3mm-thick casting wall contained 11800 grains/mm² with a thermostating system according to the invention, as compared to 5040 grains/mm² with a thermostating system without conformal channels. An image of the microstructure of an AlSi9Cu3 alloy die cast in a mould provided with a thermostating system without conformal cooling is shown in fig. 2. An image of the microstructure of an AlSi9Cu3 alloy die cast in a mould provided with a thermostating system with conformal cooling is shown in fig. 3.

The application of thermostating system 1 enabled the achievement of a fine-grain structure and as a result the achievement of better mechanical parameters of the cast, i.e. hardness and strength. The result of the fragmentation of structural grains is among others the improvement of mechanical properties of the cast, e.g. its hardness (HV_{50g}) and tensile strength (Rm); in the analysed embodiment HV_{50g}=103.0 units and Rm=324 MPa with a thermostating system according to the invention, as compared to HV_{50g}=89.7 units and Rm=296 MPa with a thermostating system without conformal channels.

### Embodiment 2. Differences in SDAS parameters

Mechanical properties of light aluminium alloys, including aluminium alloys, mostly depend on the parameters of the microstructure. One of the main parameters of the microstructure is the SDAS (*Secondary Dendrite Arm Space*) parameter, which describes the distances between the secondary arms of dendritic grains. These distances are usually used to describe "structure fragmentation", i.e. low SDAS value represent small grains in the casting structure. Measurement of the SDAS parameter allows one to determine grain fragmentation, which was carried out for the purposes of the below embodiment. There is a certain correlation between the SDAS parameter and the mechanical properties of a cast: lower SDAS values indicate the improvement of mechanical properties.

Thermostating system 1 according to the invention is designed in such way that conformal channel 4 is located at a distance of min. 4 mm from the casting surface reproduced by H13 steel material, and its oval is surrounded by a minimum 2 mm layer of copper. The shape of the channel is defined by the ratio of 3:8.

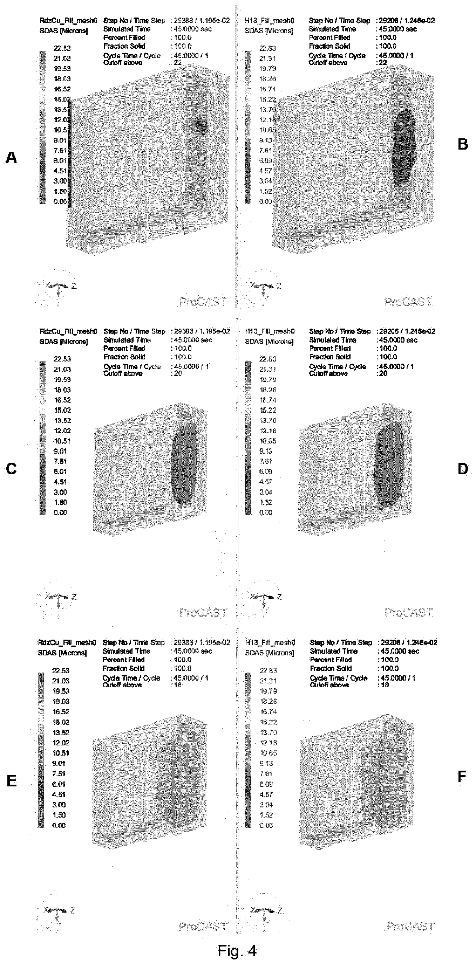

Fig. 4 shows the results of SDAS analysis for two versions of the process of the casting of aluminium alloy in a mould provided with a thermostating system according to the invention (fig. 4 A, C, E) and a traditional thermostating system (fig. 4 B, D and F). The maximum SDAS value recorded for cast microstructure obtained via traditional casting was 22.83 µm, while the value recorded for the cast obtained using a thermostating system with conformal cooling was lower and amounted to 22.53 µm.

In the case of traditional casting, the volume of cast areas with dendritic grains that demonstrated the highest SDAS values is higher than in the case of casts produced using a thermostating system with conformal cooling. For SDAS 22, 20 and 18 µm threshold values, the volume of such areas was 6544, 21543 and 40336 mm³ respectively in a cast produced using a traditional system, and 684, 16664 oraz 35648 mm³ in the case of the application of a thermostating system with conformal cooling.

### Embodiment 3. Temperature gradient conformal cooling and conformal cooling (with an additional material layer between steel and copper)

According to the next embodiment of the invention, thermostating system 1 of casting mould 2 according to the invention is designed in such way that cooling channel 3 is located at a distance of min. 4 mm from the casting surface reproduced by H13 steel material, and its oval is surrounded by interim layer 4 comprised of a minimum 2 mm layer of copper. The shape of cooling channel 4 is defined by the ratio of 3:8 mm. Thermostating system 1 contains a 2 mm layer of BB1.7 bronze (thermal conductivity 107 W/(m·K)) between the copper and H13 steel.

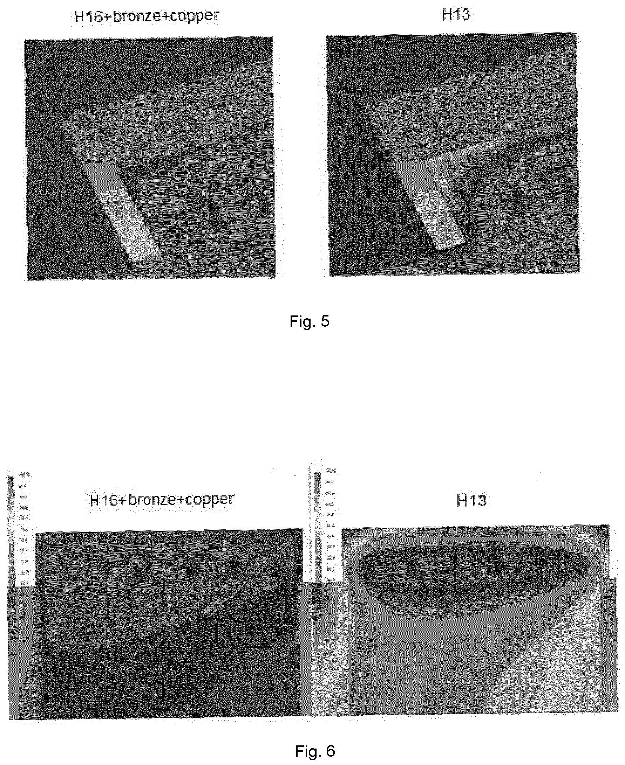

The setting of the cast in the analysed example of thermostating system 1 takes place much faster than in a traditional thermostating system (without copper). Isotherms shown in fig. 5 illustrate changes in temperature during the setting of the cast on the cross-section of the cast and thermostating system 1. We can see a significant difference between thermostating system 1 according to the invention and the traditional one, without copper, where heat transfer is slower (more variable colours). In fig. 6 the isotherms indicate particular temperature values for both examples of the thermostating system, during the last phase of cast setting. In the cross-section we can see that the thermostating system according to the invention transfers heat much faster than the traditional system (fig. 6).

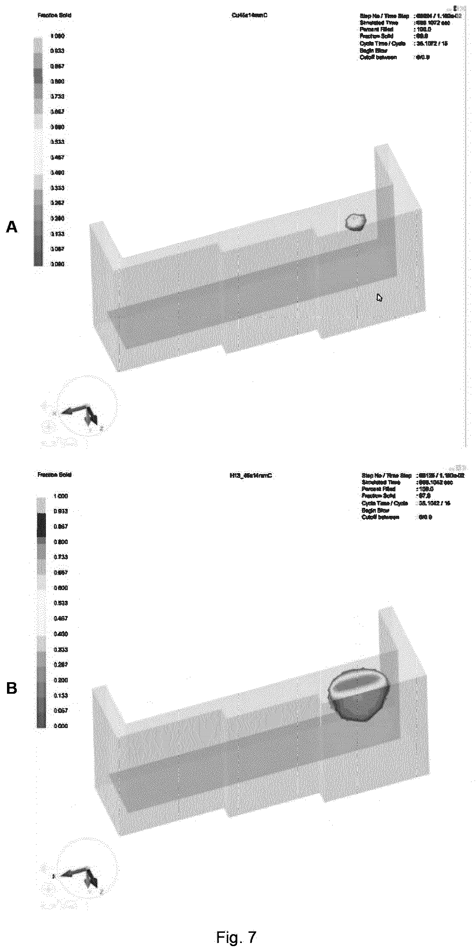

Faster heat transfer rate in the cross-section of thermostating system 1 changes the rate of the setting of castings. In the analysed case of thermostating system 1 according to the invention, the rate of setting of castings with 3mm-thick walls was 19 K/s, while in the case of the traditional thermostating system it was 21 K/s. This reduces the time of setting of liquid metal by 6 seconds, thus shortening the duration of a typical casting process cycle and reducing the temperature of the mould by 40 K, which can extend its life cycle (fig. 7).

### Embodiment 4. Production of a thermostating system.

Interim layer 4 of casting mould 2 provided with a conformal thermostating system of high heat transfer capabilities was produced using the 3D LPBF ( *Laser Powder Bed Fusion*) technology with multi-material printing. The layout of cooling channel 3, which acts as a thermostating channel, is generated in the form of voids left in selected locations during printing. Printing is carried out in layers, by way of the application of materials printed in powdery form and subsequently their local heating and melting using a computer-controlled laser. Following the bonding of selected locations of a given layer, which constitute the cross-section of the produced element, by way of melting, the next layer of powder is applied and the process is repeated. Non-bonded powder remains inside channels 3 and beyond the outline of the print, which is removed after the completion of the process. In the case of horizontal surfaces parallel or almost parallel to the XY plane of the printing machine, it is necessary to apply supports to avoid the deformation of the printed element. The developed cross-section of channel 3 is between 4 and 10 mm and was designed to avoid the use of supports due to the virtual impossibility of their removal from the complex geometry of channels 3 of thermostating system 1. In accordance with the assumptions of this concept, printing can be carried out using more than one material, as shown in embodiments 1-3 above, which is carried out by the selective placement of different materials in powdery form in planned locations during the application of printing layers.

## Claims

1. A thermostating system (1) for a casting mould (2) with high heat transfer properties, comprising of a cooling channel (3) provided inside an interim layer (4) that represents the inner part of a casting mould (2) made of steel, preferably of tool steel, and a cooling device configured to provide a cooling medium to a cooling channel (3), **characterised in that** the interim layer (4) of the cooling channel (3) is made of material whose thermal conductivity is higher by at least 250 W/(m K) than the thermal conductivity of the working surface (5) of the casting mould.

2. The thermostating system (1) of casting mould (2) according to claim 1, **characterised in that** the working surface of casting mould (2) is made of material of the thermal conductivity of between 25 and 28 W/(m K), while the interim layer of the cooling channel is made of materials with a higher thermal conductivity between 300 and 400 W/(m·K).

3. The thermostating system (1) of casting mould (2) according to claim 1 or 2, **characterised in that** the interim layer of the cooling channel is made of copper.

4. The thermostating system (1) of casting mould (2)according to any of the claims from 1 to 3, **characterised in that** between the working surface of casting mould (2) and interim layer (4) of cooling channel (3) there is an additional layer made of material whose thermal conductivity is higher than that of the working part of casting mould (2) and lower than that of interim layer (4), and there is functional gradation of thermal conductivity between the layers.

5. The thermostating system (1) of casting mould (2) according to claim 4, **characterised in that** the additional layer is made of bronze.

6. The thermostating system (1) of casting mould (2) according to any of the claims from 1 to 5, **characterised in that** the distance between the cooling channel provided in the casting mould and the working surface of the casting mould that is in contact with the mould, is between 3 and 15 mm.

7. The thermostating system (1) of casting mould (2) according to claim 6, **characterised in that** the distance between the cooling channel provided in the casting mould and the working surface of the casting mould that is in contact with the mould, is 10 mm.

8. The thermostating system (1) of casting mould (2) according to any of the claims from 1 to 7, **characterised in that** the cooling channel has an elliptical cross-section with a short axis to long axis ration of 3:8.

9. A method of production of thermostating system (1) of casting mould (2) according to any of the claims from 1 to 8 **characterised in that** the interim layer (4) of casting mould (2) together with cooling channel (3) is produced using additive methods via three-dimensional (3D) printing, with the use of powder made of adequate metal and/or metallic alloy.

10. The method of production ofthermostating system (1) of casting mould (2) according to claim 9 , **characterised in that** the interim layer (4) of cooling channel (3) is provided in the form of voids left in selected locations during the generation of the three-dimensional print, wherein the three-dimensional print is produced in layers through the application of powdery materials, preferably copper powder for interim layer (4), then tool steel powder for the working surface (5) of casting mould (2), and subsequently their local heating and melting using a computer-controlled laser.
